# EUROPÄISCHE PATENTSCHRIFT

(11) **EP 2 276 917 B1**
(45) Veröffentlichungstag und Bekanntmachung des Hinweises auf die Patenterteilung: **14.03.2012**
(21) Anmeldenummer: 09745629.7
(22) Anmeldetag: 02.04.2009
(51) Int. Cl.: F01N 3/20, C01C 1/00, B01D 53/54, B01D 53/90, B01D 53/94, B01D 53/96

(54) **VORRICHTUNG, SYSTEM UND VERFAHREN ZUR BEREITSTELLUNG EINES REDUKTIONSMITTEL FÜR EIN SYSTEM ZUR SELEKTIVEN KATALYTISCHEN REDUKTION VON STICKOXIDEN**
DEVICE, SYSTEM AND METHOD FOR PROVIDING A REDUCING AGENT FOR A SYSTEM FOR THE SELECTIVE CATALYTIC REDUCTION OF NITROGEN OXIDES
DISPOSITIF, SYSTÈME ET PROCÉDÉ POUR LA FOURNITURE D'UN AGENT RÉDUCTEUR DESTINÉ À UN SYSTÈME POUR LA RÉDUCTION CATALYTIQUE SÉLECTIVE D'OXYDES D'AZOTE

(30) Priorität: 13.05.2008 DE 102008001709
(43) Veröffentlichungstag der Anmeldung: 26.01.2011
(73) Patentinhaber: Robert Bosch GmbH, 70442 Stuttgart (DE)
(72) Erfinder: GLOECKLE, Markus, 70192 Stuttgart (DE)
(86) Internationale Anmeldenummer: PCT/EP2009/053921
(87) Internationale Veröffentlichungsnummer: WO 2009/138296

(56) Entgegenhaltungen:
- WO-A1-2007/000170
- WO-A1-2007/095955
- FR-A1- 2 852 057

## Beschreibung

Die vorliegende Erfindung betrifft eine Reduktionsmittelbereitstellungsvorrichtung, ein Reduktionsmittelbereitstellungssystem und ein Verfahren zur Bereitstellung eines Reduktionsmittels für ein System zur selektiven katalytischen Reduktion von Stickoxiden.

### Stand der Technik

Aufgrund der immer schärfer werdenden Stickoxid- (NOx)-Emissionsgrenzwerte für DieselFahrzeuge, magermotorbetriebene Fahrzeuge und Verbrennungsanlagen, gewinnen stickoxidmindernde Abgasnachbehandlungssysteme und -verfahren an Bedeutung.

Bislang sind bereits zahlreiche stickoxidmindernde Abgasnachbehandlungssysteme und Abgasnachbehandlungsverfahren bekannt. Üblicherweise wird bei diesen Systemen und Verfahren eine stickoxidreduzierende chemische Verbindung, ein so genanntes Reduktionsmittel, kontinuierlich oder zeitweise dem Abgas des Fahrzeugs oder der Verbrennungsanlage zugeführt und an speziellen Katalysatoren in einer selektiven katalytischen Reaktion (SCR) mit den Stickoxiden des Abgases zu harmlosen Verbindungen wie Stickstoff, Wasser und gegebenenfalls Kohlendioxid umgesetzt. Als Reduktionsmittel können dabei Ammoniak, Kohlenmonoxid oder Kohlenwasserstoffe dienen. Besonders effizient für die Reduktion von Stickoxiden ist dabei das Reduktionsmittel Ammoniak.

Herkömmlicherweise wird Ammoniak in Form einer 32,5 Gew.-%igen Harnstoff/WasserLösung (HWL) gespeichert. Das Ammoniak wird dabei durch das Einsprühen der HarnstoffLösung in den Abgastrakt gefolgt von einer katalytischen Zersetzung des Harnstoffs erzeugt.

Neben der Ammoniak-Vorläufersubstanz Harnstoff sind ferner Feststoffe, so genannte Metallsalzspeicher, bekannt, die gasförmiges Ammoniak reversibel speichern und wieder freisetzen können. Das Ammoniak wird dabei herkömmlicherweise durch Erwärmen des Metallsalzspeichers freigesetzt. Beim Betrieb des Fahrzeugs oder der Verbrennungsanlage kann der Wärmeeintrag unter Nutzung der Abgaswärme erfolgen. Problematisch ist jedoch der Wärmeeintrag in der Startphase des Fahrzeugs beziehungsweise der Verbrennungsanlage. Üblicherweise wird daher der Metallsalzspeicher während der Startphase mit einer Heizvorrichtung beheizt. Aufgrund
- der geringen Effizienz der Wärmeeinkopplung beziehungsweise Wärmeübertragung von der Heizvorrichtung auf den festen Metallsalzspeicher,
- des limitierten Wärmetransports infolge einer geringen Wärmeleitfähigkeit des festen Metallsalzspeichers,
- des Wärmeverlusts des Metallsalzspeichers an die Umgebung,
- der großen "passiven" thermischen Masse des Metallsalzspeichers und
- der Gefahr thermischer "Überschwinger" im System mit ungewollter Ammoniakfreisetzung infolge der Trägheit des Speichersystems, welche unter anderem hohe Anforderungen an Regelung des Wärmeeintrages erfordert,
ist das Freisetzen von Ammoniak aus Metallsalzspeichern durch Wärmezufuhr, insbesondere in der Startphase, energetisch aufwändig und führt zu einem Anstieg des Kraftstoffbeziehungsweise Energieverbrauchs.

Reduktions mittelbereitstellungsvorrichtungen gemäß dem Stand der Technik sind in WO 2007/095955,

WO 2007/000170, DE 19728343, DE 102007 004602 sowie

WO 2008/009455 beschrieben.

### Offenbarung der Erfindung

### Vorteile der Erfindung

Die erfindungsgemäße Vorrichtung nach Anspruch 1, das erfindungsgemäße System nach Anspruch 13 und das erfindungsgemäße Verfahren nach Anspruch 15, haben den Vorteil, dass das Reduktionsmittel, beispielsweise Ammoniak, insbesondere in der Startphase (Kaltstart) eines Kraftfahrzeugs oder einer Verbrennungsanlage, energieeffizienter und dynamischer freigesetzt wird. Darüber hinaus bieten die erfindungsgemäße Vorrichtung, das erfindungsgemäße System und das erfindungsgemäße Verfahren bei der Sicherheit im Umgang mit dem Reduktionsmittel Vorteile, da zur Bereitstellung des Reduktionsmittels keine hohen Temperaturen erforderlich sind und die Freisetzung des Reduktionsmittel "digital" an- und abgeschaltet werden kann.

### Zeichnungen

Weitere Vorteile und vorteilhafte Ausgestaltungen des erfindungsgemäßen Gegenstandes werden durch die Zeichnungen und deren Beschreibung veranschaulicht und in der nachfolgenden Beschreibung detaillierter erläutert. Dabei ist zu beachten, dass die Figuren nur veranschaulichenden Charakter haben und nicht dazu gedacht sind, die Erfindung in irgendeiner Form einzuschränken.
- Fig. 1: zeigt eine erfindungsgemäße Reduktionsmittelbereitstellungsvorrichtung und eine Möglichkeit des Anschlusses der Reduktionsmittelbereitstellungsvorrichtung an eine Abgasanlage einer Verbrennungsmaschine.
- Fig. 2: zeigt ein erfindungsgemäßes Reduktionsmittelbereitstellungssystem und eine Möglichkeit des Anschlusses des Reduktionsmittelbereitstellungssystems an eine Abgasanlage einer Verbrennungsmaschine.

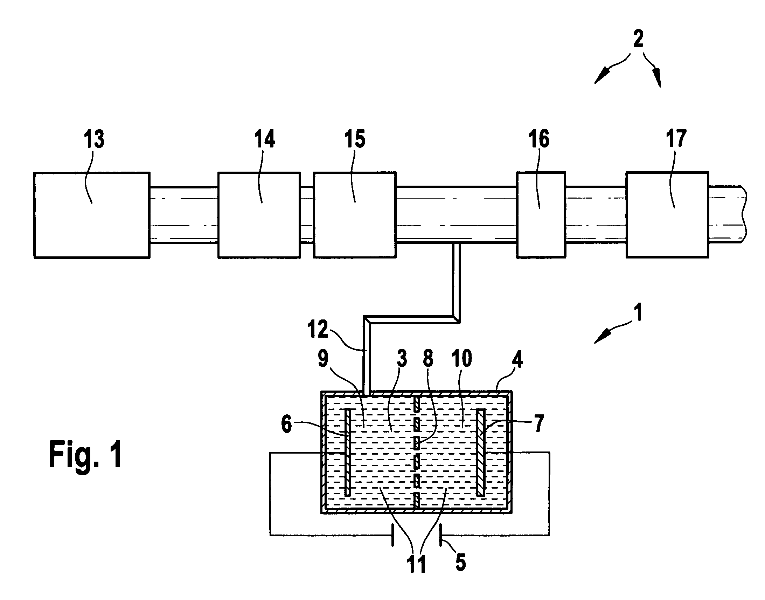

Figur 1 zeigt eine erfindungsgemäße Reduktionsmittelbereitstellungsvorrichtung **1** für ein System 2 zur selektiven katalytischen Reduktion von Stickoxiden, insbesondere im Abgas einer Verbrennungsmaschine, beispielsweise eines Kraftfahrzeug, insbesondere eines Dieselfahrzeug, und/oder einer Verbrennungsanlage und/oder einer Feuerungsanlage. Figur 1 veranschaulicht, dass die erfindungsgemäße Reduktionsmittelbereitstellungsvornchtung **1** ein Reduktionsmittel-Speichermedium **3** und eine Elektrolysevorrichtung **4**, **5**, **6**, **7**, **8**, **9**, **10**, **11** umfasst. Figur 1 zeigt, dass die Elektrolysevorrichtung eine Kathode **6,** eine Anode **7** und eine Elektrolysekammer **4** umfasst. Die Elektrolysekammer **4** umfasst dabei das Reduktionsmittel-Speichermedium **3**.

Figur 1 zeigt ferner, dass die Kathode **6** und die Anode **7** an eine Spannungsversorgungsvorrichtung **5** angeschlossen sind. Darüber hinaus veranschaulicht Figur 1, dass die Kathode **6** und die Anode **7** jeweils zumindest teilweise, insbesondere vollständig, in der Elektrolysekammer **4** angeordnet sind.

Wie Figur 1 zeigt, ist die Elektrolysekammer **4** im Rahmen dieser Ausführungsform der vorliegenden Erfindung durch ein Diaphragma **8** in einen Kathodenraum **9** und einen Anodenraum **10** unterteilt. Im Rahmen der in Figur 1 gezeigten Ausführungsform umfasst sowohl der Kathoden- **9** als auch der Anodenraum **10** einen Elektrolyten **11**, vorzugsweise eine aprotische ionische Flüssigkeit.

Figur 1 veranschaulicht ferner, dass im Rahmen dieser Ausführungsform der vorliegenden Erfindung die Elektrolysekammer **4**, insbesondere der Kathodenraum **9** der Elektrolysekammer **4**, zur Entnahme des Reduktionsmittels an eine Leitung **12**, insbesondere eine Gasleitung, angeschlossen beziehungsweise anschließbar ist. Durch diese Leitung **12** kann das freigesetzte Reduktionsmittel vorteilhafterweise der Abgasablage, insbesondere dem Abgasnachbehandlungssystem einer Verbrennungsmaschine **13**, insbesondere dem System zur selektiven katalytischen Reduktion von Stickoxiden **2** eines Kraftfahrzeugs, beispielsweise eines Dieselfahrzeugs, oder einer Verbrennungsanlage, beispielsweise Feuerungsanlagen, zugeführt werden.

Im Rahmen der in Figur 1 gezeigten Ausführungsform der vorliegenden Erfindung ist die Leitung **12** derart mit einer Abgasanlage einer Verbrennungsmaschine **13** verbunden, in der das Abgas zunächst einen Oxidationskatalysator **14**, dann einen Dieselpartikelfilter **15**, sodann optional einen Reduktionsmittelmischer **16** und anschließend einen Katalysator **17** zur selektiven katalytischen Reduktion von Stickoxiden durchströmt, dass die Leitung **12** das Reduktionsmittel dem Abgas vor dem Durchströmen des Katalysator **17** zur selektiven katalytischen Reduktion von Stickoxiden zuführt. Beispielsweise kann das Reduktionsmittel dabei dem Abgas wie in Figur 1 gezeigt vor dem Durchströmen des Reduktionsmittelmischers **16** oder direkt (nicht dargestellt) dem Reduktionsmittelmischer **16** zugeführt werden.

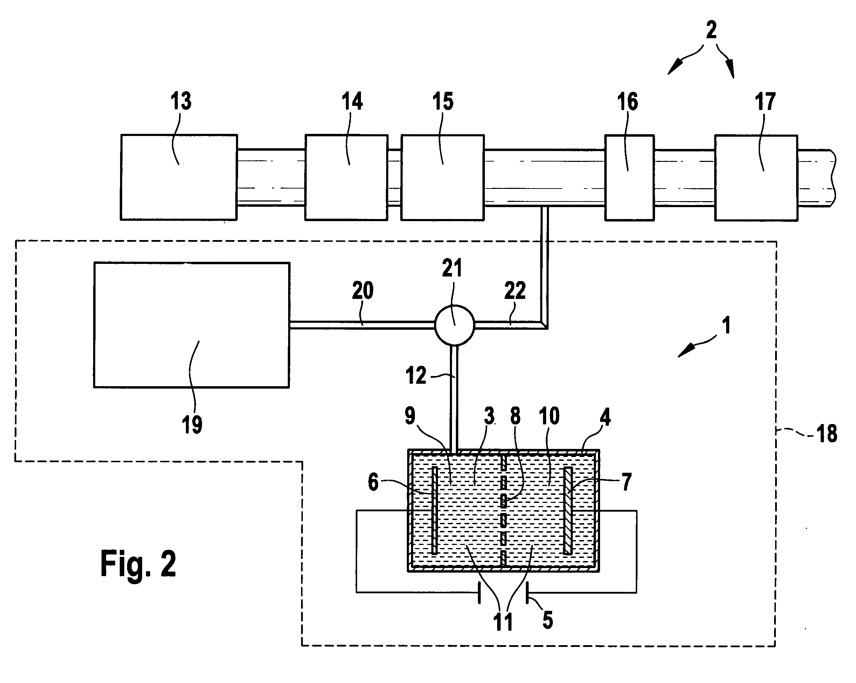

Figur 2 zeigt ein erfindungsgemäßes Reduktionsmittelbereitstellungssystem 18, welches neben der erfindungsgemäßen Reduktionsmittelbereitstellungsvornchtung **1** eine weitere, beispielsweise eine herkömmliche, Reduktionsmittelbereitstellungsvorrichtung **19** umfasst. Die erfindungsgemäße Reduktionsmittelbereitstellungsvorrichtung **1** dient hierbei vorteilhafterweise der Bereitstellung des Reduktionsmittels während der Startphase (Kaltstartphase) der Verbrennungsmaschine **13**, während die weitere Reduktionsmittelbereitstellungsvorrichtung **19** nach dem Erreichen der Betriebstemperatur der Verbrennungsmaschine **13** als Reduktionsmittel-Hauptspeicher dient, welcher vorzugsweise durch die in der Betriebsphase entstehende Abgaswärme beheizt wird.

Figur 2 veranschaulicht ferner, dass die erfindungsgemäße **1** und die weitere **18** Reduktionsmittelbereitstellungsvorrichtung im Rahmen dieser Ausführungsform der vorliegenden Erfindung jeweils an eine Leitung **12**, **20**, insbesondere Gasleitung, zur Entnahme des Reduktionsmittels angeschlossen beziehungsweise anschließbar sind, wobei die beiden Leitungen **12**, **20** über eine Umschaltvorrichtung **21**, insbesondere ein Umschaltventil, zu einer Leitung **22** vereinigt werden.

Die vorliegende Erfindung beruht auf dem Prinzip, dass durch eine Änderung des Oxidationszustandes des Reduktionsmittel-Speichermediums und/oder des Reduktionsmittels, insbesondere jedoch des Reduktionsmittel-Speichermediums, die Stärke einer Wechselwirkung, insbesondere Bindung, zwischen dem Reduktionsmittel-Speichermedium und dem Reduktionsmittel gezielt verändert werden kann. Mit anderen Worten: Das Reduktionsmittel-Speichermedium speichert oder gibt das Reduktionsmittel erfindungsgemäß in Abhängigkeit vom Oxidationszustand des Reduktionsmittel-Speichermediums und/oder des Reduktionsmittels, insbesondere jedoch in Abhängigkeit vom Oxidationszustand des Reduktionsmittel-Speichermediums, frei.

Dieses Prinzip kann beispielsweise auf Reduktionsmittel-Speichermedien angewendet werden, die im Reduktionsmittel-unbeladenen Zustand ein Metallsalz oder ein Metallkomplex oder eine Metallverbindung oder eine Metalllegierung oder ein Metall und im Reduktionsmittel-beladenen Zustand ein Reduktionsmittel-Metallkomplex oder ein Salz eines Reduktionsmittel-Metallkomplexes, insbesondere ein Ammin-Metallkomplex oder ein Salz eines Ammin-Metallkomplexes sind, und in Abhängigkeit vom Oxidationszustand des Metallatoms (Zentralatoms) das Reduktionsmittel, beispielsweise Ammoniak (NH₃), Kohlenmonoxid (CO) oder einen Kohlenwasserstoff, insbesondere jedoch Ammoniak, als Liganden, insbesondere koordinativ, binden oder freisetzen.

Als Reduktionsmittel-Speichermedium sind grundsätzlich alle Metalle geeignet, die ein Reduktionsmittel in Abhängigkeit von ihrem Oxidationszustand koordinativ binden oder freisetzen. Beispielsweise eignen sich hierfür Übergangsmetalle und unter bestimmten Bedingungen auch Alkali- und Erdalkalimetalle.

Im Rahmen einer bevorzugten Ausführungsform der vorliegenden Erfindung umfasst das Reduktionsmittel-Speichermedium daher mindestens ein Metall ausgewählt aus der Gruppe der Alkalimetalle, Erdalkalimetalle und Übergangsmetalle, insbesondere der 3d- und/oder 4d-Übergangsmetalle, beispielsweise Lithium, Natrium, Kalium, Cäsium, Magnesium, Calcium, Strontium, Barium, Vanadium, Chrom, Mangan, Eisen, Kobalt, Nickel, Kupfer, Zink und/oder Silber. Insbesondere kann das Reduktionsmittel-Speichermedium **3** im Reduktionsmittel-beladenen Zustand ein Komplex der allgemeinen Formel:

MRₐX

sein, wobei R für mindestens ein Reduktionsmittel ausgewählt aus der Gruppe umfassend Ammoniak, Kohlenmonoxid und Kohlenwasserstoffe, beispielsweise Ethen, insbesondere jedoch Ammoniak; M für mindestens ein Kation ausgewählt aus der Gruppe, umfassend Lithium, Natrium, Kalium, Cäsium, Magnesium, Calcium, Strontium, Barium, Vanadium, Chrom, Mangan, Eisen, Kobalt, Nickel, Kupfer, Zink und/oder Silber; X für mindestens ein Anion ausgewählt aus der Gruppe umfassend Fluorid, Chlorid, Bromid, Iodid, Nitrat, Thiocyanat, Sulfat, Molybdat, Tetrafluoroborat, Phosphat und/oder Hexafluorophosphat, und a für eine Zahl von ≥ 1 bis ≤ 20, insbesondere von ≥ 2 bis ≤ 12, steht. Beispiele für erfindungsgemäße Reduktionsmittel-Speichermedien **3** im Reduktionsmittel-beladenen Zustand sind Mg(NH₃)₆Cl₂, Ca(NH₃)₈Cl₂, Sr(NH₃)₈Cl₂, Ba(NH₃)₈Ch, Ca(NH₃)₈Br₂, Sr(NH₃)₈Br₂.

Die Änderung des Oxidationszustandes des Metallatoms einer solchen Verbindung kann vorteilhafterweise zur Folge haben, dass die Bindung zwischen dem Metallatom und dem Reduktionsmittel-Liganden derart stark geschwächt oder gestärkt wird, dass das Reduktionsmittel bereits bei Raumtemperatur und/oder unter Normaldruck frei gesetzt oder gespeichert wird. Eine derartige Dissoziation oder Assoziation (Bindung) kann dabei je nach Art der Komplexverbindung durch Reduktion und/oder Oxidation ausgelöst werden.

Eine erfindungsgemäße Reduktionsmittel-Freisetzung aus einem Reduktionsmittel-Speichermedium kann unter reduzierenden Bedingungen der Reaktionsgleichung:

RₐMⁿ⁺ + Xⁿ⁻ + m · e⁻ → M^{(n - m)+} + a · R + Xⁿ⁻

folgen, wobei M für das/die zentrale/n Metallatom/e in der Koordinationsverbindung, R für das koordinativ gebundene Reduktionsmittel, a für die Zahl der koordinativ gebundenen Reduktionsmittel, X für das, die Gegenion/en, n für die Ladungszahl des/der Metallatoms/e im oxidierten Zustand beziehungsweise für die summarische Gesamtladung der Gegenionen, und m für die Zahl der zugeführten Elektronen e, steht.

Grundsätzlich können im Rahmen der vorliegenden Erfindung alle bekannten Elektrodenmaterialien für die Kathode und die Anode verwendet werden. Im Rahmen einer Ausführungsform der vorliegenden Erfindung ist die Kathode jedoch eine Platin-, Silber-, oder Magnesiumelektrode und/oder die Anode eine Elektrode aus einem Material mit gleicher oder niedrigerer Elektronegativität als das Material der Kathode, beispielsweise eine Magnesium-oder Calciumelektrode.

Beispielsweise kann in einer erfindungsgemäßen Reduktionsmittelbereitstellungsvorrichtung Mg(NH₃)₆Cl₂ an der Kathode, beispielsweise einer Platin-, Silber-, oder Magnesiumelektrode, gemäß der Gleichung:

[Mg(NH₃)₆]²⁺ + 2 Cl⁻ + 2 e⁻ → Mg + 6 NH₃ + 2 Cl⁻

unter Ammoniakfreisetzung reduziert werden, wobei an der Anode, insbesondere einer Opferanode aus Magnesium, gemäß der Gleichung:

Mg + 2 Cl⁻ → Mg²⁺ + 2 Cl⁻ + 2 e⁻

Magnesium oxidiert wird.

Vorzugsweise umfasst die Elektrolysekammer dabei einen Elektrolyten. Im Rahmen einer bevorzugten Ausführungsform der vorliegenden Erfindung umfasst die Elektrolysekammer als Elektrolyten eine, insbesondere aprotische, ionische Flüssigkeit. Besonders geeignet sind dabei ionischen Flüssigkeiten, die kein oder nur ein sehr geringes Lösevermögen für das Reduktionsmittel, insbesondere Ammoniak, aufweisen.

Beispielsweise kann die ionische Flüssigkeit mindestens ein Kation, ausgewählt aus der Gruppe umfassend Imidazolium, Pyrrolidinium, Pyridinium, Piperidinium, Ammonium, Phosphonium und/oder Sulfonium, aufweisen. Insbesondere kann die ionische Flüssigkeit mindestens ein Kation, ausgewählt aus der Gruppe umfassend 1-Ethyl-3-methylimidazolium, 1-Butyl-3-methylimidazolium, 1-Hexyl-3-methylimidazolium, 1-Methyl-3-octylimidazolium, 1-Propyl-3-methylimidazolium, 1-Hexadecyl-3-methylimidazolium, 1-Allyl-3-methylimidazolium, 1-Ethyl-2,3-dimethylimidazolium, 1-Butyl-2,3-dimethylimidazolium, 1-Butyl-1-methyl-pyrrolidinium, 1-Ethyl-3-methylpyridinium, 1-Ethyl-3-hydroxymethylpyridinium, 1-Ethyl-4-methylpyridinium, 1-Ethyl-4-hydroxymethylpyridinium, 1-Butyl-3-methylpyridinium 1-Butyl-3-hydroxymethylpyridiniuni 1-Butyl-4-methylpyridinium 1-Butyl-4-hydroxymethylpyridinium, 1-Methyl-1-propyl-piperidinium, Ethylammonium, Butyl-trimethylammonium, Methyltrioctylammonium, (2-Hydroxyethyl)trimethylammonium (Cholin) und/oder Triethylsulphnoium, insbesondere 1-Butyl-3-methylimidazolium; und/oder mindestens ein Anion, ausgewählt aus der Gruppe umfassend Chlorid, Bromid, Iodid, Thiocyanat, Nitrat, Tetrafluoroborat, Hexafluorophosphat, Hexafluoroantimonat, Dicyanamid, n-Octylsulfat, Methansulfonat, Trifuormethansulfonat, Bis(trifluormethylsulfonyl)imid, Tosylat, 2(2-Methoxyethoxy)ethylsulfat, Ethylsulfat, Perfluorbutansulfonat (nonaflate) und/oder Dimethylphosphat, insbesondere Chlorid und/oder Tetrafluoroborat, aufweisen.

Beispiele für geeignete ionische Flüssigkeit sind 1-Ethyl-3-methylimidazolium-chlorid, 1-Ethyl-3-methylimidazolium-bromid, 1-Ethyl-3-methyl-imidazolium-thiocyanat, 1-Ethyl-3-methylimidazolium-dicyanamid, 1-Ethyl-3-methylimidazolium-tetrafluoroborat, 1-Ethyl-3-methylimidazolium-trifuormethansulfonat, 1-Ethyl-3-methylimidazolium-ethylsulfat, 1-Ethyl-3-methylimidazolium-methansulfonat, 1-Ethyl-3-methylimidazolium-bis(trifluormethylsulfonyl)imid, 1-Ethyl-3-methylimidazolium-tosylat, 1-Ethyl-3-methylimidazolium-2(2-methoxyethoxy)ethylsulfat, 1-Butyl-3-methylimidazolium-chlorid, 1-Butyl-3-methylimidazolium-bromid, 1-Butyl-3-methylimidazolium-tetrafluoroborat, 1-Butyl-3-methylimidazolium-hexafluorophosphat, 1-Butyl-3-methylimidazolium-trifluormethansulfonat, 1-Butyl-3-methylimidazolium-methansulfonat, 1-Butyl-3-methylimidazolium-bis(trifluormethylsulfonyl)imid, 1-Butyl-3-methylimidazolium-hexafluoroantimonate, 1-Butyl-3-methylimidazolium-n-octylsulfat, 1-Butyl-3-methylimidazolium-2(2-methoxyethoxy)ethylsulfat, 1-Hexyl-3-methylimidazolium-chlorid, 1-Hexyl-3-methylimidazolium-tetrafluoroborat, 1-Hexyl-3-methylimidazolium-hexafluorophosphat, 1-Hexyl-3-methylimidazolium-bis(trifluormethylsulfonyl)imid, 1-Methyl-3-octylimidazolium-chlorid, 1-Methyl-3-octylimidazolium-bromid, 1-Methyl-3-octylimidazolium-iodid, 1-Methyl-3-octylimidazolium-tetrafluoroborat, 1-Methyl-3-octylimidazolium-hexafluorophosphat, 1-Propyl-3-methylimidazolium-iodid, 1-Hexadecyl-3-methylimidazolium-chlorid, 1-Allyl-3-methylimidazolium-chlorid, 1-Butyl-2,3-dimethylimidazolium-chlorid, 1-Butyl-2,3-dimethylimidazolium-tetrafluoroborat, 1-Butyl-2,3-dimethylimidazolium-hexafluorophosphat, 1-Butyl-2,3-dimethylimidazolium-bis(trifluormethylsulfonyl)imid, 1-Ethyl-2,3-dimethylimidazolium-bis(trifluormethylsulfonyl)imid, 1-Ethyl-3-methylpyridinium-bis(trifluormethylsulfonyl)imid, 1-Ethyl-3-hydroxymethylpyridinium-ethylsulfat, 1-Ethyl-3-methylpyridinium-ethylsulfat, 1-Ethyl-3-methylpyridinium-perfluorbutansulfonat, 1-Butyl-3-methylpyridinium-bromid, 1-Butyl-3-methylpyridinium-tetrafluoroborat, 1-Butyl-3-methylpyridinium-hexafluorophosphat, 1-Butyl-3-methylpyridinium-trifluormethansulfonat, 1-Butyl-4-methylpyridinium-bromid, 1-Butyl-4-methylpyridinium-tetrafluoroborat, 1-Butyl-4-methylpyridinium-hexafluorophosphat, 1-Butyl-1-methyl-pyrrolidinium-bis-(trifluormethylsulfonyl)-imid, 1-Butyl-1-methyl-pyrrolidinium-dicyanamid, 1-Methyl-1-propylpiperidinium-bis-(trifluormethylsulfonyl)-imid, Ethylammonium-nitrat, Butyl-trimethylammonium-bis(trifluormethylsulfonyl)imid, Methyltrioctylammonium-bis(trifluormethylsulfonyl)imid, (2-Hydroxyethyl)trimethylammonium-dimethylphosphat, und/oder Triethylsulphonium-bis(trifluormethylsulfonyl)imid, insbesondere 1-Butyl-3-methylimidazolium-chlorid und/oder 1-Butyl-3-methylimidazolium-tetrafluoroborat.

Im Rahmen einer besonders bevorzugten Ausführungsform ist das Reduktionsmittel-Speichermedium im Elektrolyten, insbesondere in der ionischen Flüssigkeit, gelöst.

Bei der Verwendung einer Opferanode, beispielsweise einer Magnesiumanode, kann es zusätzlich erforderlich sein, den Durchtritt von freien Opferanodenkationen, beispielsweise Magnesiumionen (Mg²⁺)-Ionen zum Kathodenraum zu unterbinden: Dies liegt darin begründet, dass ab dem Überschreiten einer bestimmtem Opferanodenkationen-Konzentration die Opferanodenkationen bei einem positiveren Potential als das Reduktionsmittel-Speichermedium, beispielsweise Mg(NH₃)₆Cl₂, insbesondere als die Reduktionsmittel-Speichermediumkationen, beispielsweise [Mg(NH₃)₆]²⁺-Ionen, reduziert würden und damit nur noch eine elektrochemische Raffination des Operanodemnaterials, beispielsweise Magnesium, ablaufen würde. Mit anderen Worten: Das Opferanodenmaterial, beispielsweise Magnesium, würde dann - analog zu Raffinationsprozessen bei der Feinreinigung von Kupfer oder Silber - an der Anode in Lösung gehen und an der Kathode wieder abgeschieden werden.

Aus diesen Gründen kann es daher vorteilhaft sein, dass das Reduktionsmittel-Speichermedium, beispielsweise Mg(NH₃)₆Cl₂, nur im Elektrolyten des Kathodenraumes vorliegt, während sich im Anodenraum allenfalls Operanodenkationen, beispielsweise, Magnesiumionen, befinden.

Vorzugsweise umfasst daher im Rahmen einer Ausführungsform der vorliegenden Erfindung nur der Kathodenraum das Reduktionsmittel-Speichermedium im Reduktionsmittel-beladenen Zustand.

Um dies zu gewährleisten, ist die Elektrolysekammer im Rahmen einer bevorzugten Ausführungsform der vorliegenden Erfindung durch ein Diaphragma in einen Kathodenraum und einen Anodenraum unterteilt ist. Das Diaphragma kann dabei beispielsweise eine semipermeable Membran sein. Vorzugsweise gewährleistet die semipermeable Membran dabei den Durchtritt der Gegenionen, beispielsweise der Chlorid-Ionen, nicht jedoch den Durchtritt der Opferanodenkationen, beispielsweise Magnesiumionen.

Im Rahmen einer besonders bevorzugten Ausführungsform der vorliegenden Erfindung ist die semipermeable Membran Reduktionsmittel-undurchlässig, beispielsweise gasundurchlässig. Durch eine solche Membran wird darüber hinaus vorteilhafterweise verhindert, dass das an der Kathode entstehende Reduktionsmittel, beispielsweise Ammoniak, in den Anodenraum eindringt, wo es mit in Lösung befindlichen "freien" Opferanodenkationen, beispielsweise Magnesiumkationen, unter Rückbildung des Reduktionsmittel-Metallkomplexes, insbesondere Ammin-Metallkomplexes, beispielsweise Mg(NH₃)₆Cl₂, wieder gebunden werden könnte.

Neben der erfindungsgemäßen Reduktionsmittelbereitstellungsvorrichtung, betrifft die vorliegende Erfindung auch ein Reduktionsmittelbereitstellungssystem für ein System zur selektiven katalytischen Reduktion von Stickoxiden, insbesondere im Abgas einer Verbrennungsmaschine, beispielsweise eines Kraftfahrzeug, insbesondere eines Dieselfahrzeug, und/oder einer Verbrennungsanlage und/oder einer Feuerungsanlage. Dieses Reduktionsmittelbereitstellungssystem umfasst erfindungsgemäß eine erste, erfindungsgemäße Reduktionsmittelbereitstellungsvorrichtung sowie eine zweite Reduktionsmittelbereitstellungsvorrichtung. Als zweite Reduktionsmittelbereitstellungsvorrichtung kann dabei im Rahmen der vorliegenden Erfindung eine herkömmliche Reduktionsmittelbereitstellungsvorrichtung eingesetzt werden. Beispielsweise kann als zweite Reduktionsmittelbereitstellungsvorrichtung eine Vorrichtung eingesetzt werden, aus welcher das Reduktionsmittel durch Wärmezufuhr, beispielsweise durch eine Heizvorrichtung und/oder Abgaswärme, durch Einwirkung von elektromagnetischer Strahlung und/oder durch Druckabsenkung freigesetzt wird.

Im Rahmen einer Ausführungsform der vorliegenden Erfindung sind die erste und zweite Reduktionsmittelbereitstellungsvorrichtung jeweils an eine Leitung, insbesondere Gasleitung, zur Entnahme des Reduktionsmittels angeschlossen oder anschließbar. Vorzugsweise werden diese beiden Leitungen über eine Umschaltvorrichtung, insbesondere ein Umschaltventil, zu einer Leitung vereinigt.

Darüber hinaus betrifft die vorliegende Erfindung ein Verfahren zur Bereitstellung eines Reduktionsmittels für ein System zur selektiven katalytischen Reduktion von Stickoxiden, insbesondere im Abgas einer Verbrennungsmaschine, beispielsweise eines Kraftfahrzeug, insbesondere eines Dieselfahrzeug, und/oder einer Verbrennungsanlage und/oder einer Feuerungsanlage, beispielsweise mit einer erfindungsgemäßen Reduktionsmittelbereitstellungsvorrichtung und/oder einem erfindungsgemäßen Reduktionsmittelbereitstellungssystem, in dem in einem ersten Verfahrensschritt das Reduktionsmittel aus einem Reduktionsmittel-Speichermedium durch Änderung des Oxidationszustandes des Reduktionsmittel-Speichermediums und/oder Reduktionsmittels, insbesondere jedoch des Reduktionsmittel-Speichermediums, freigesetzt wird. Insbesondere wird dies durch das Anlegen einer ersten Spannung an die Kathode und Anode der erfindungsgemäßen Reduktionsmittelbereitstellungsvorrichtung und/oder des erfindungsgemäßen Reduktionsmittelbereitstellungssystems gewährleistet.

In einem zweiten optionalen Verfahrensschritt kann, insbesondere neues, Reduktionsmittel in dem Reduktionsmittel-Speichermedium durch Änderung des Oxidationszustandes des Reduktionsmittel-Speichermediums und/oder Reduktionsmittels, insbesondere des Reduktionsmittel-Speichermediums, gespeichert werden. Insbesondere wird dies durch das Anlegen einer zur ersten Spannung umgekehrten zweiten Spannung an die Kathode und Anode der erfindungsgemäßen Reduktionsmittelbereitstellungsvorrichtung und/oder des erfindungsgemäßen Reduktionsmittelbereitstellungssystems gewährleistet.

Im Rahmen einer Ausführungsform des erfindungsgemäßen Verfahrens wird insbesondere in der Startphase und/oder beispielsweise in einer dynamischen Betriebphase der Verbrennungsmaschine das Reduktionsmittel aus der ersten Reduktionsmittelbereitstellungsvorrichtung entnommen; und/oder in einer, beispielsweise anschließenden, insbesondere im Wesentlichen konstanten, Betriebsphase der Verbrennungsmaschine wird das Reduktionsmittel, beispielsweise durch Betätigung der, insbesondere regel- und/oder steuerbaren, Umschalt-und/oder Dosiervorrichtung, insbesondere durch Umschalten des Umschaltventils, aus der zweiten Reduktionsmittelbereitstellungsvorrichtung entnommen.

## Patentansprüche

1. Reduktionsmittelbereitstellungsvorrichtung (1) für ein System zur selektiven katalytischen Reduktion von Stickoxiden (2), umfassend
- ein Reduktionsmittel-Speichermedium (3), welches das Reduktionsmittel in Abhängigkeit vom Oxidationszustand speichert oder freigibt, und
- eine Elektrolysevorrichtung.

2. Reduktionsmittelbereitstellungsvorrichtung nach Anspruch 1, **dadurch gekennzeichnet, dass** die Elektrolysevorrichtung eine Elektrolysekammer (4) und eine an eine Spannungsversorgungsvorrichtung (5) angeschlossene oder anschließbare Kathode (6) und Anode (7) umfasst, wobei die Kathode (6) und Anode (7) jeweils zumindest teilweise in der Elektrolysekammer (4) angeordnet sind, wobei die Elektrolysekammer (4) das Reduktionsmittel-Speichermedium (3) umfasst.

3. Reduktionsmittelbereitstellungsvorrichtung nach Anspruch 1 oder 2, **dadurch gekennzeichnet, dass** das Reduktionsmittel Ammoniak, Kohlenmonoxid und/oder ein Kohlenwasserstoff, insbesondere Ammoniak, ist.

4. Reduktionsmittelbereitstellungsvorrichtung nach einem der vorherigen Ansprüche, **dadurch gekennzeichnet, dass** das Reduktionsmittel-Speichermedium (3) im Reduktionsmittel-unbeladenen Zustand ein Metallsalz oder ein Metallkomplex oder eine Metallverbindung oder eine Metalllegierung oder ein Metall und im Reduktionsmittel-beladenen Zustand ein Reduktionsmittel-Metaltkomplex oder ein Salz eines Reduktionsmittel-Metallkomplexes ist.

5. Reduktionsmittelbereitstellungsvorrichtung nach einem der vorherigen Ansprüche, **dadurch gekennzeichnet, dass** das Reduktionsmittel-Speichermedium (3) mindestens ein Metall ausgewählt aus der Gruppe der Alkalimetalle, Erdalkalimetalle und Übergangsmetalle umfasst.

6. Reduktionsmittelbereitstellungsvorrichtung nach einem der vorherigen Ansprüche, **dadurch gekennzeichnet, dass** das Reduktionsmittel-Speichermedium (3) im Reduktionsmittel-beladenen Zustand ein Komplex der allgemeinen Formel:
MRₐX
ist, wobei
R für mindestens ein Reduktionsmittel ausgewählt aus der Gruppe umfassend Ammoniak, Kohlenmonoxid und Kohlenwasserstoffe, beispielsweise Ethen, insbesondere Ammoniak,
M für mindestens ein Kation ausgewählt aus der Gruppe, umfassend Lithium, Natrium, Kalium, Cäsium, Magnesium, Calcium, Strontium, Barium, Vanadium, Chrom, Mangan, Eisen, Kobalt, Nickel, Kupfer, Zink und/oder Silber,
X für mindestens ein Anion ausgewählt aus der Gruppe umfassend Fluorid, Chlorid, Bromid, Iodid, Nitrat, Thiocyanat, Sulfat, Molybdat, Tetrafluoroborat, Phosphat und/oder Hexafluoroophosphat, und
a für eine Zahl von ≥ 1 bis ≤ 20, insbesondere von ≥ 2 bis ≤ 12,
steht.

7. Reduktionsmittelbereitstellungsvorrichtung nach einem der vorherigen Ansprüche, **dadurch gekennzeichnet, dass** die Elektrolysekammer (4) durch eine Reduktionsmittelundurchlässige, semipermeable Membran in einen Kathodenraum (9) und einen Anodenraum (10) unterteilt ist.

8. Reduktionsmittelbereitstellungsvorrichtung nach einem der vorherigen Ansprüche, **dadurch gekennzeichnet, dass** nur der Kathodenraum (9) das Reduktionsmittel-Speichermedium (3) im Reduktionsmittel-beladenen Zustand umfasst.

9. Reduktionsmittelbereitstellungsvorrichtung nach einem der vorherigen Ansprüche, **dadurch gekennzeichnet, dass** die Elektrolysekammer (4) eine aprotische, ionische Flüssigkeit (11) umfasst.

10. Reduktionsmittelbereitstellungsvorrichtung nach einem der vorherigen Ansprüche, **dadurch gekennzeichnet, dass** die aprotische, ionische Flüssigkeit (11) mindestens ein Kation, ausgewählt aus der Gruppe umfassend Imidazolium, Pyrrolidinium, Pyridinium, Piperidinium, Ammonium, Phosphonium und/oder Sulfonium, aufweist.

11. Reduktionsmittelbereitstellungsvorrichtung nach einem der vorherigen Ansprüche, **dadurch gekennzeichnet, dass** die aprotische, ionische Flüssigkeit (11)
- mindestens ein Kation, ausgewählt aus der Gruppe umfassend 1-Ethyl-3-methylimidazolium, 1-Butyl-3-methylimidazolium, 1-Hexyl-3-methylimidazolium, 1-Methyl-3-octylimidazolium, 1-Propyl-3-methylimidazolium, 1-Hexadecyl-3-methylimidazolium, 1-Allyl-3-methylimidazolium, 1-Ethyl-2,3-dimethylimidazolium, 1-Butyl-2,3-dimethylimidazolium, 1-Butyl-1-methyl-pyrrolidiniuni, 1-Ethyl-3-methylpyridinium, 1-Ethyl-3-hydroxymethylpyridinium, 1-Ethyl-4-methylpyridinium, 1-Ethyl-4-hydroxymethylpyridinium, 1-Butyl-3-methylpyridinium 1-Butyl-3-hydroxymethylpyridinium, 1-Butyl-4-methylpyridinium 1-Butyl-4-hydroxymethylpyridinium, 1-Methyl-1-propyl-piperidinium, Ethylammonium, Butyltrimethyl-ammonium, Methyltrioctylammonium, (2-Hydroxyethyl)trimethylammonium (Cholin) und/oder Triethylsulphonium, insbesondere 1-Butyl-3-methylimidazolium, und
- mindestens ein Anion, ausgewählt aus der Gruppe umfassend Chlorid, Bromid, Iodid, Thiocyanat, Nitrat, Tetrafluoroborat, Hexafluorophosphat, Hexafluoroantimonat, Dicyanamid, n-Octylsulfat, Methansulfonat, Trifuormethansulfonat, Bis(trifluormethylsulfonyl)imid, Tosylat, 2(2-Methoxyethoxy)ethylsulfat, Ethylsulfat, Perfluorbutansulfonat (nonaflate) und/oder Dimethylphosphat, insbesondere Chlorid und/oder Tetrafluoroborat,
aufweist.

12. Reduktionsmittelbereitstellungsvorrichtung nach einem der vorherigen Ansprüche, **dadurch gekennzeichnet, dass** die Kathode (6) eine Platin-, Silber-, oder Magnesiumelektrode ist und die Anode (7) eine Elektrode aus einem Material mit gleicher oder niedrigerer Elektronegativität als das Material der Kathode (6) ist.

13. Reduktionsmittelbereitstellungssystem (18) für ein System zur selektiven katalytischen Reduktion von Stickoxiden (2) umfassend
- eine erste Reduktionsmittelbereitstellungsvorrichtung (1) nach einem der vorherigen Ansprüche, und
- eine zweite Reduktionsmittelbereitstellungsvorrichtung (19).

14. Reduktionsmittelbereitstellungssystem (18) nach Anspruch 13, **dadurch gekennzeichnet, dass** die erste (1) und zweite (2) Reduktionsmittelbereitstellungsvorrichtung jeweils an eine Leitung (12, 20), insbesondere Gasleitung, zur Entnahme des Reduktionsmittels an angeschlossen oder anschließbar sind, wobei die beiden Leitungen (12, 20) über ein Umschaltvorrichtung (21), insbesondere ein Umschaltventil, zu einer Leitung (22) vereinigt werden.

15. Verfahren zur Bereitstellung eines Reduktionsmittels für ein System (2) zur selektiven katalytischen Reduktion von Stickoxiden im Abgas einer Verbrennungsmaschine (13) mit einer Reduktionsmittelbereitstellungsvorrichtung (1) nach einem der Ansprüche 1 bis 12 und/oder einem Reduktionsmittelbereitstellungssystem (18) nach Anspruch 13 oder 14, in dem
- in einem ersten Verfahrensschritt das Reduktionsmittel aus einem Reduktionsmittel-Speichermedium (3) durch Änderung des Oxidationszustandes des Reduktionsmittel-Speichermediums (3) und/oder Reduktionsmittels freigesetzt wird, und/oder
- in einem zweiten Verfahrensschritt ein Reduktionsmittel in dem Reduktionsmittel-Speichermedium (3) durch Änderung des Oxidationszustandes des Reduktionsmittel-Speichermediums (3) und/oder Reduktionsmittels gespeichert wird.

16. Verfahren nach Anspruch 15, **dadurch gekennzeichnet, dass**
- in der Startphase und/oder in einer dynamischen Betriebphase der Verbrennungsmaschine (13) das Reduktionsmittel aus der ersten Reduktionsmittelbereitstellungsvornchtung (1) entnommen wird, und/oder
- in einer im Wesentlichen konstanten Betriebsphase der Verbrennungsmaschine (13) das Reduktionsmittel aus der zweiten Reduktionsmittelbereitstellungsvorrichtung (19) entnommen wird.

## Claims

1. Reducing agent provision apparatus (1) for a system for the selective catalytic reduction of nitrogen oxides (2), which comprises
- a reducing agent storage medium (3) which stores or releases the reducing agent as a function of the oxidation state and
- an electrolysis apparatus.

2. Reducing agent provision apparatus according to Claim 1, **characterized in that** the electrolysis apparatus comprises an electrolysis chamber (4) and a cathode (6) and anode (7) which are or can be connected to a voltage supply apparatus (5), where the cathode (6) and anode (7) are each at least partly arranged in the electrolysis chamber (4) and the electrolysis chamber (4) comprises the reducing agent storage medium (3).

3. Reducing agent provision apparatus according to Claim 1 or 2, **characterized in that** the reducing agent is ammonia, carbon monoxide and/or a hydrocarbon, in particular ammonia.

4. Reducing agent provision apparatus according to any of the preceding claims, **characterized in that** the reducing agent storage medium (3) in the state which is not loaded with reducing agent is a metal salt or a metal complex or a metal compound or a metal alloy or a metal and in the state which is loaded with reducing agent is a reducing agent-metal complex or a salt of a reducing agent-metal complex.

5. Reducing agent provision apparatus according to any of the preceding claims, **characterized in that** the reducing agent storage medium (3) comprises at least one metal selected from the group consisting of the alkali metals, alkaline earth metals and transition metals.

6. Reducing agent provision apparatus according to any of the preceding claims, **characterized in that** the reducing agent storage medium (3) in the state which is loaded with reducing agent is a complex of the general formula:
MR_{A}X
where
R is at least one reducing agent selected from the group consisting of ammonia, carbon monoxide and hydrocarbons, for example ethene, in particular ammonia,
M is at least one cation selected from the group consisting of lithium, sodium, potassium, caesium, magnesium, calcium, strontium, barium, vanadium, chromium, manganese, iron, cobalt, nickel, copper, zinc and/or silver,
X is at least one anion selected from the group consisting of fluoride, chloride, bromide, iodide, nitrate, thiocyanate, sulphate, molybdate, tetrafluoroborate, phosphate and hexafluorophosphate and
a is from ≥ 1 to ≤ 20, in particular from ≥ 2 to ≤ 12.

7. Reducing agent provision apparatus according to any of the preceding claims, **characterized in that** the electrolysis chamber (4) is divided into a cathode space (9) and an anode space (10) by a semipermeable membrane which is impermeable to the reducing agent.

8. Reducing agent provision apparatus according to any of the preceding claims, **characterized in that** only the cathode space (9) comprises the reducing agent storage medium (3) in the state which is loaded with reducing agent.

9. Reducing agent provision apparatus according to any of the preceding claims, **characterized in that** the electrolysis chamber (4) comprises an aprotic, ionic liquid (11).

10. Reducing agent provision apparatus according to any of the preceding claims, **characterized in that** the aprotic, ionic liquid (11) has at least one cation selected from the group consisting of imidazolium, pyrrolidinium, pyridinium, piperidinium, ammonium, phosphonium and sulphonium.

11. Reducing agent provision apparatus according to any of the preceding claims, **characterized in that** the aprotic, ionic liquid (11) has
- at least one cation selected from the group consisting of 1-ethyl-3-methylimidazolium, 1-butyl-3-methylimidazolium, 1-hexyl-3-methylimidazolium, 1-methyl-3-octylimidazolium, 1-propyl-3-methylimidazolium, 1-hexadecyl-3-methylimidazolium, 1-allyl-3-methylimidazolium, 1-ethyl-2,3-dimethylimidazolium, 1-butyl-2;3-dimethylimidazolium, 1-butyl-1-methyl-pyrrolidinium, 1-ethyl-3-methylpyridinium, 1-ethyl-3-hydroxymethylpyridinium, 1-ethyl-4-methylpyridinium, 1-ethyl-4-hydroxymethyl-pyridinium, 1-butyl-3-methylpyridinium, 1-butyl-3-hydroxymethylpyridinium, 1-butyl-4-methylpyridinium, 1-butyl-4-hydroxymethyl-pyridinium, 1-methyl-1-propylpiperidinium, ethylammonium, butyltrimethylammonium, methyltrioctylammonium, (2-hydroxyethyl)trimethylammonium(choline) and triethylsulphonium, in particular 1-butyl-3-methylimidazolium, and
- at least one anion selected from the group consisting of chloride, bromide, iodide, thiocyanate, nitrate, tetrafluoroborate, hexafluorophosphate, hexafluoroantimonate, dicyanamide, n-octylsulphate, methanesulphonate, trifluoromethanesulphonate, bis(trifluoromethylsulphonyl)imide, tosylate, 2-(2-methoxyethoxy)ethylsulphate, ethyl-sulphate, perfluorobutanesulphonate (nonaflate) and dimethylphosphate, in particular chloride and/or tetrafluoroborate.

12. Reducing agent provision apparatus according to any of the preceding claims, **characterized in that** the cathode (6) is a platinum, silver or magnesium electrode and the anode (7) is an electrode composed of a material having an equal or lower electronegativity than the material of the cathode (6).

13. Reducing agent provision system (18) for a system for the selective catalytic reduction of nitrogen oxides (2), which comprises
- a first reducing agent provision apparatus (1) according to any of the preceding claims and
- a second reducing agent provision apparatus (19).

14. Reducing agent provision system (18) according to Claim 13, **characterized in that** the first (1) and second (2) reducing agent provision apparatus is in each case connected or able to be connected to a line (12, 20), in particular gas line, for taking off the reducing agent, where the two lines (12, 20) are combined via a switching apparatus (21), in particular a switching valve, to form one line (22).

15. Process for providing a reducing agent for a system (2) for the selective catalytic reduction of nitrogen oxides in the exhaust gas of an internal combustion engine (13) having a reducing agent provision apparatus (1) according to any of Claims 1 to 12 and/or a reducing agent provision system (18) according to Claim 13 or 14, wherein
- the reducing agent is released from a reducing agent storage medium (3) by changing the oxidation state of the reducing agent storage medium (3) and/or reducing agent in a first process step and/or
- a reducing agent is stored in the reducing agent storage medium (3) by changing the oxidation state of the reducing agent storage medium (3) and/or reducing agent in a second process step.

16. Process according to Claim 15, **characterized in that**
- the reducing agent is taken off from the first reducing agent provision apparatus (1) in the startup phase and/or in a dynamic operating phase of the internal combustion engine (13) and/or
- the reducing agent is taken off from the second reducing agent provision apparatus (19) in an essentially constant operating phase of the internal combustion engine (13).

## Revendications

1. Dispositif (1) de préparation d'agent réducteur pour un système de réduction catalytique sélective d'oxydes d'azote (2), le dispositif comportant :
- un moyen (3) d'accumulation d'agent réducteur qui conserve ou libère l'agent réducteur en fonction de l'état d'oxydation et
- un dispositif d'électrolyse.

2. Dispositif de préparation d'agent réducteur selon la revendication 1, **caractérisé en ce que** le dispositif d'électrolyse comporte une chambre d'électrolyse (4) et une cathode (6) ainsi qu'une anode (7) raccordées ou aptes à être raccordées à un dispositif (5) d'alimentation en tension, la cathode (6) et l'anode (7) étant toutes deux disposées au moins en partie dans la chambre d'électrolyse (4), la chambre d'électrolyse (4) contenant le moyen d'accumulation (3) d'agent réducteur.

3. Dispositif de préparation d'agent réducteur selon les revendications 1 ou 2, **caractérisé en ce que** l'agent réducteur est l'ammoniac, le monoxyde de carbone et/ou un autre hydrocarbure et en particulier l'ammoniac.

4. Dispositif de préparation d'agent réducteur selon l'une des revendications précédentes, **caractérisé en ce que** le moyen (3) d'accumulation d'agent réducteur est à l'état non chargé en agent réducteur un sel métallique, un complexe métallique, un composé métallique, un alliage métallique ou un métal et à l'état chargé en agent réducteur un complexe d'un métal et de l'agent réducteur ou un sel d'un complexe d'un métal et de l'agent réducteur.

5. Dispositif de préparation d'agent réducteur selon l'une des revendications précédentes, **caractérisé en ce que** le moyen (3) d'accumulation d'agent réducteur contient au moins un métal sélectionné dans l'ensemble des métaux alcalins, des métaux alcalino-terreux et des métaux de transition.

6. Dispositif de préparation d'agent réducteur selon l'une des revendications précédentes, **caractérisé en ce que** lorsqu'il est à l'état non chargé en agent réducteur, le moyen (3) d'accumulation d'agent réducteur est un complexe de formule générale :
MRₐX
dans laquelle
R représente au moins un agent réducteur sélectionné dans l'ensemble comportant l'ammoniac, le monoxyde de carbone et les hydrocarbures, par exemple l'éthène et en particulier l'ammoniac,
M représente au moins un cation sélectionné dans l'ensemble comportant le lithium, le sodium, le potassium, le césium, le magnésium, le calcium, le strontium, le baryum, le vanadium, le chrome, le manganèse, le fer, le cobalt, le nickel, le cuivre, le zinc et/ou l'argent,
X représente au moins un anion sélectionné dans l'ensemble comportant le fluorure, le chlorure, le bromure, l'iodure, le nitrate, le thiocyanate, le sulfate, le molybdate, le tétrafluoroborate, le phosphate et/ou l'hexafluorophosphate et
a représente un nombre ≥ 1 à ≤ 20 et en particulier ≥ 2 à ≤ 12.

7. Dispositif de préparation d'agent réducteur selon l'une des revendications précédentes, **caractérisé en ce que** la chambre d'électrolyse (4) est divisée par une membrane semi-perméable mais imperméable à l'agent réducteur d'un espace de cathode (9) et un espace d'anode (10).

8. Dispositif de préparation d'agent réducteur selon l'une des revendications précédentes, **caractérisé en ce que** seul l'espace de cathode (9) contient le moyen d'accumulation (3) d'agent réducteur à l'état chargé en agent réducteur.

9. Dispositif de préparation d'agent réducteur selon l'une des revendications précédentes, **caractérisé en ce que** la chambre d'électrolyse (4) contient un liquide ionique aprotique (11).

10. Dispositif de préparation d'agent réducteur selon l'une des revendications précédentes, **caractérisé en ce que** le liquide ionique aprotique (11) présente au moins un cation sélectionné dans l'ensemble comportant l'imidazolium, le pyrrolidinium, le pyridinium, le pipéridinium, l'ammonium, le phosphonium et/ou le sulfonium.

11. Dispositif de préparation d'agent réducteur selon l'une des revendications précédentes, **caractérisé en ce que** le liquide ionique aprotique (11) présente
- au moins un cation sélectionné dans l'ensemble comprenant le 1-éthyl-3-méthylimidazolium, le 1-butyl-3-méthylimidazolium, le 1-hexyl-3-méthylimidazolium, le 1-méthyl-3-octylimidazolium, le 1-propyl-3-méthylimidazolium, le 1-hexadécyl-3-méthylimidazolium, le 1-allyl-3-méthylimidazolium, le 1-éthyl-2,3-diméthylimidazolium, le 1-butyl-2,3-diméthylimidazolium, le 1-butyl-1-méthylpyrrolidinium, le 1-éthyl-3-méthylpyridinium, le 1-éthyl-3-hydroxyméthylpyridinium, le 1-éthyl-4-méthylpyridinium, le 1-éthyl-4-hydroxyméthylpyridinium, le 1-butyl-3-méthylpyridinium, le 1-butyl-3-hydroxyméthylpyridinium, le 1-butyl-4-méthylpyridinium, le 1-butyl-4-hydroxyméthylpyridinium, le 1-méthyl-1-propylpipéridinium, l'éthylammonium, le butyl-triméthylammonium, le méthyltrioctylammonium, le (2-hydroxyéthyl)triméthylammonium (choline) et/ou le triéthylsulphonium, et en particulier le 1-butyl-3-méthylimidazolium et
- au moins un anion sélectionné dans l'ensemble comportant le chlorure, le bromure, l'iodure, le thiocyanate, le nitrate, le tétrafluoroborate, l'hexafluorophosphate, l'hexafluoroantimonate, le dicyanamide, le n-octylsulfate, le méthanesulfonate, le trifluorométhanesulfonate, le bis(trifluorométhylsulfonyl)imide, le tosylate, le 2(2-méthoxyéthoxy)éthylsulfate, l'éthylsulfate, le perfluorobutanesulfonate (nonaflate) et/ou le diméthylphosphate, et en particulier le chlorure et/ou le tétrafluoroborate.

12. Dispositif de préparation d'agent réducteur selon l'une des revendications précédentes, **caractérisé en ce que** la cathode (6) est une électrode en platine, en argent ou en magnésium et **en ce que** l'anode (7) est une électrode en un matériau dont l'électronégativité est identique ou plus basse que celle du matériau de la cathode (6).

13. Système (18) de préparation d'agent réducteur pour un système de réduction catalytique sélective d'oxydes d'azote (2), le système comportant :
- un premier dispositif (1) de préparation d'agent réducteur selon l'une des revendications précédentes et
- un deuxième dispositif (19) de préparation d'agent réducteur.

14. Système (18) de préparation d'agent réducteur selon la revendication 13, **caractérisé en ce que** le premier (1) et le deuxième (2) dispositifs de préparation d'agent réducteur sont raccordés ou peuvent être raccordés tous deux à un conduit (12, 20), en particulier un conduit de gaz, pour le prélèvement de l'agent réducteur, les deux conduits (12, 20) étant réunis en un conduit (22) par un dispositif de commutation (21), en particulier une soupape de commutation.

15. Procédé de préparation d'un agent réducteur pour un système (2) de réduction catalytique sélective d'oxydes d'azote dans les gaz d'échappement d'un moteur à combustion interne (13) présentant un dispositif (1) de préparation d'agent réducteur selon l'une des revendications 1 à 12 et/ou un système (18) de préparation d'agent réducteur selon les revendications 13 ou 14, et dans lequel :
- dans une première étape du procédé, l'agent réducteur est libéré d'un moyen (3) d'accumulation d'agent réducteur par modification de l'état d'oxydation du moyen (3) d'accumulation d'agent réducteur et/ou de l'agent réducteur, et/ou
- dans une deuxième étape du procédé, un agent réducteur est accumulé dans le moyen (3) d'accumulation d'agent réducteur par modification de l'état d'oxydation du moyen (3) d'accumulation d'agent réducteur et/ou de l'agent réducteur.

16. Procédé selon la revendication 15, **caractérisé en ce que**
- dans la phase de démarrage et/ou une phase de fonctionnement dynamique du moteur à combustion interne (13), l'agent réducteur est prélevé du premier dispositif (1) de préparation d'agent réducteur et/ou
- dans une phase de fonctionnement essentiellement constant du moteur à combustion interne (13), l'agent réducteur est prélevé du deuxième dispositif (19) de préparation d'agent réducteur.
